(19) Europäisches Patentamt

European Patent Office

Office européen des brevets

(11) Veröffentlichungsnummer : **0 360 989 B1**

(12) **EUROPÄISCHE PATENTSCHRIFT**

(45) Veröffentlichungstag der Patentschrift :
02.01.92 Patentblatt 92/01

(51) Int. Cl.⁵ : **C02F 1/72**

(21) Anmeldenummer : **89112460.4**

(22) Anmeldetag : **07.07.89**

(54) **Verfahren zur chemisch-oxidativen Behandlung von Wasser, das toxische und/oder biologisch nicht oder nur schwer abbaubare Stoffe enthält.**

(30) Priorität : **24.09.88 DE 3832523**

(43) Veröffentlichungstag der Anmeldung :
**04.04.90 Patentblatt 90/14**

(45) Bekanntmachung des Hinweises auf die
Patenterteilung :
**02.01.92 Patentblatt 92/01**

(84) Benannte Vertragsstaaten :
**FR GB NL**

(56) Entgegenhaltungen :
EP-A- 0 238 731
**PATENT ABSTRACTS OF JAPAN, Band 11, Nr.
24 (C-399)[2471], 23. Januar 1987; & JP-A-61
197 093 (IDEMITSU PETROCHEM CO. LTD)
01-09-1986**

(73) Patentinhaber :
**KERNFORSCHUNGSZENTRUM KARLSRUHE
GMBH
Weberstrasse 5 Postfach 3640
W-7500 Karlsruhe 1 (DE)**

(72) Erfinder : **Gilbert, Ernst, Dr.
Schneidemühlerstrasse 37c
W-7500 Karlsruhe 1 (DE)**
Erfinder : **Eberle, Siegfried Helmut, Prof. Dr.
Luisenstrasse 43
W-7514 Eggenstein-Leopoldshafen (DE)**

EP 0 360 989 B1

**Beschreibung**

Die Erfindung betrifft ein Verfahren zur chemisch-oxidativen Behandlung von Wasser, das toxische und-/oder biologisch nicht oder schwer abbaubare Stoffe enthält, entsprechend dem Oberbegriff des Hauptanspruchs.

Wasserstoffperoxid wird in manchen Fällen zur Oxidation anorganischer Abwasserkomponenten eingesetzt, die bei der normalen biologischen Reinigung toxisch wirken, wie z.B. Sulfite, Thiosulfate, Cyanide und Nitrate. Es wird weiterhin zur Desodorierung von Abluft und zur Entgiftung von Abwässern verwendet, die Phenole oder Formaldehyd enthalten.

Während die Oxidation anorganischer Verbindungen mit Wasserstoffperoxid in wäßrigem Medium bei geeigneten Reaktionsbedingungen direkt und schnell abläuft, erfordert eine effektive Oxidation von organischen Wasserinhaltsstoffen die Anwesenheit von Katalysatoren.

Als Katalysatoren kommen bevorzugt zwei- und dreiwertige Eisenionen in Betracht.

Die besonders intensive Oxidationswirkung einer Lösung aus zweiwertigen Eisenionen und Wasserstoffperoxid wurde von Fenton entdeckt ; eine solche Lösung wird als Fenton's Reagenz bezeichnet. Eisen wird der Lösung in Form eines löslichen Eisensalzes, z.B. $FeCl_2$, zugegeben.

Das wesentliche oxidierende Agens in Fenton's Reagenz ist das Hydroxyradikal, das primär aus Fe(II)-Ionen und $H_2O_2$ entsteht :

$$H^+ + Fe^{2+} + H_2O_2 \rightarrow Fe^{3+} + H_2O + HO°$$

Das entstehende dreiwertige Eisen wird mit $H_2O_2$ wieder zum zweiwertigen Eisen reduziert :

$$Fe^{3+} + H_2O_2 \rightarrow Fe^{2+} + HO_2° + H^+$$

Der Reaktionsablauf ist in Wirklichkeit jedoch weit komplexer als diese Formeln andeuten.

Wesentlich ist die Bildung reaktiver Zwischenverbindungen, die schnell mit organischen Verbindung reagieren können.

Das Ausmaß der Verunreinigung von Wasser, insbesondere von Abwasser, wird häufig durch drei Parameter charakterisiert :

Der CSB-Wert (Chemischer Sauerstoffbedarf) bezeichnet die Menge an Sauerstoff, die zur Oxidation der im Wasser enthaltenen organischen Stoffe notwendig ist.

Der DOC-Wert (Dissolved Organic Carbon) bezeichnet die Menge des in Wasser in Form von organischen Verbindungen gelösten Kohlenstoffs.

Der AOX-Wert (Absorbierbare organische Halogenverbindungen) gibt die Menge des in Wasser in Form von halogenorganischen Verbindungen gelösten Halogens an.

Aus der Europäischen Patentanmeldung mit der Veröffentlichungsnummer 0238731 ist ein zweistufiges Verfahren bekannt, mit dem Abwässer, die organische Stoffe wie Phenol und Methylenchlorid sowie Schwermetalle enthalten, durch Anwendung von Fenton's Reagenz gereinigt werden können. Nach der Oxidation der organisch Stoffe wird der pH-Wert durch Zugabe von Kalk auf 8,5 bis 9,5 eingestellt. Danach wird als Fällungshilfsmittel ein Polymer zugegeben und der sich bildende Niederschlag abgetrennt, getrocknet und einer Sondermülldeponie zugeführt.

Aus der DE-OS 2703268 ist bekannt, die Wasserreinigung mit Hilfe von Fenton's Reagenz in eisernen Kesseln durchzuführen. Hierbei lösen sich katalytisch wirksame Mengen von Eisen aus der Kesselwand. Der sich bei der nachfolgenden Neutralisierung bildende Niederschlag wird abgetrennt. Die Druckschrift enthält keine Information über die weitere Verarbeitung dieses Niederschlags.

Die Oxidation von toxischen und/oder biologisch nicht oder schwer abbaubaren Stoffe mit Fenton's Reagenz zur Umwandlung in biologisch abbaubare Stoffe ist zur Zeit noch nicht wirtschaftlich, weil der Einsatz des Eisens ein Kostenfaktor ist und der sich bildende eisenhaltige Schlamm beseitigt werden muß. Weil er durch Spuren von Schadstoffen verunreinigt sein kann oder ist, wird in der Regel die Verbringung auf eine Sondermülldeponie verlangt mit den entsprechenden Kosten- und Unterbringungsproblemen.

Aufgabe der Erfindung ist es, die Betriebskosten des Verfahrens zu senken und insbesondere die Menge des eisenhaltigen Schlamms und damit von anfallendem Sonderabfall zu vermindern.

Die Aufgabe wird erfindungsgemäß durch die im Kennzeichen des Hauptanspruchs aufgeführten Maßnahmen gelöst. Die Unteransprüche geben vorteilhafte Ausgestaltungen des erfindungsgemäßen Verfahrens an.

Beim erfindungsgemäßen Verfahren wird der Niederschlag, der sich bei der Neutralisierung oder bei der Einstellung des pH-Wertes auf 6 bis 9 nach der Oxidation bildet, abgetrennt und an Stelle von Eisen oder Eisensalzen für weitere Oxidationszyklen als Katalysator eingesetzt.

2

Zur Einstellung des pH-Wertes auf 6 bis 9 eignen sich insbesondere Alkalihydroxide, vorzugsweise Natriumhydroxid oder Magnesiumoxid und Magnesiumcarbonat. Diese Stoffe sind deshalb bevorzugt, weil sie nach dem Neutralisieren in der Lösung bleiben.

Wasserstoffperoxid wird entweder gleichzeitig oder erst nach der Zugabe des Niederschlags und dem Einstellen auf pH-Werte zwischen 2 und 5 zudosiert.

Die Dosierung kann einmalig oder zeitlich oder örtlich in Teilmengen erfolgen. Die Menge an $H_2O_2$ richtet sich nach Art und Menge der Inhaltsstoffe und kann ein Vielfaches des Ausgangs-CSB-Wertes in g/g betragen.

Die Eisenmenge sollte bezogen auf die $H_2O_2$-Menge mindestens bei einem Verhältnis von $H_2O_2$ : Fe = 10 : 1 mol/mol liegen. Die Einstellung des pH-Wertes auf 6 bis 9 wird nach der Abreaktion des Wasserstoffperoxids vorgenommen.

Der wesentliche Vorteil des Verfahrens liegt in der Rezyklierung des gebildeten eisenhaltigen Schlamms, wodurch die Entstehung von weiterem Abfall verhindert und eine Verminderung des Bedarfs an Eisensalzen erreicht wird.

Die Oxidation kann diskontinuierlich oder kontinuierlich durchgeführt werden, wobei entsprechend der Durchlaufgeschwindigkeit des zu oxidierenden Abwassers der eisenhaltige Schlamm nach der Abtrennung dem Abwasser zudosiert und gleichzeitig mit Schwefelsäure aus pH 2 bis 5 eingestellt wird.

Die Erfindung wird im folgenden an drei Durchführungsbeispielen näher erläutert.

Beispiel 1

Oxidation von o-Toluolsulfonsäure mit $H_2O_2/Fe^{3+}$ bzw. mit eisenhaltigem Schlamm.

O-Toluolsulfonsäure als Modellsubstanz für Waschmittelsulfonsäure wurde in einer Konzentration von 2 g/l eingesetzt. Der CSB-Wert der Lösung beträgt 2340 mg/l. Als Startkatalysator wird $FeCl_3$ verwendet. In Abhängigkeit von der $H_2O_2$-Dosierung und der zugesetzten Eisenmenge wird der $H_2O_2$-Abbau sowie die Abnahme des CBS-Wertes bei Anfangs-pH-Wert von 3 verfolgt. Die Reaktion wird als beendet angesehen, wenn kein $H_2O_2$ mehr nachweisbar ist.

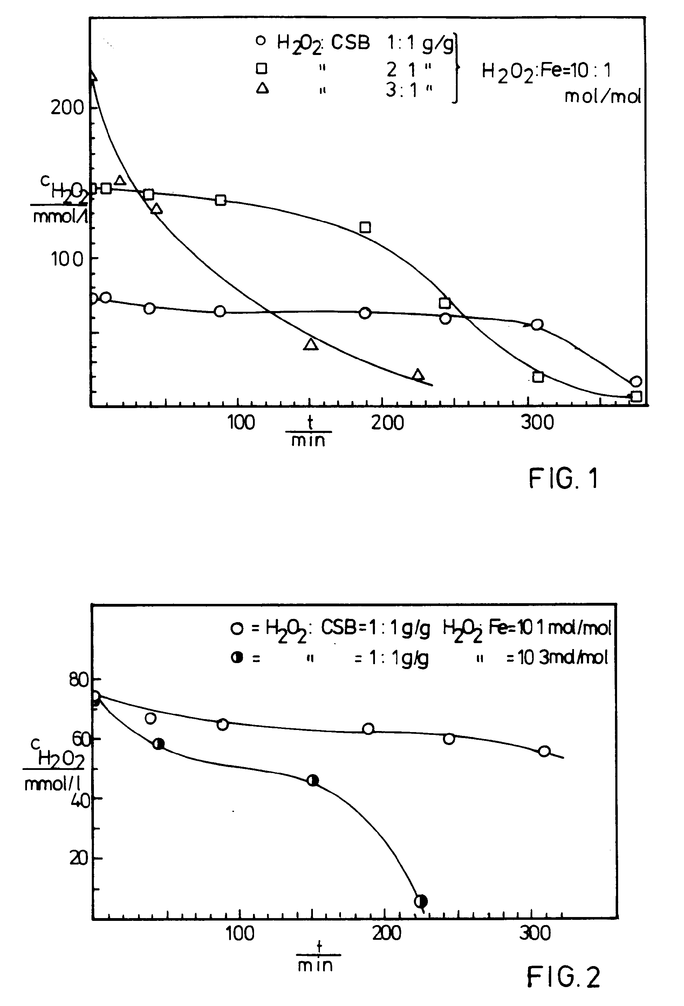

In Fig. 1 ist die $H_2O_2$-Abnahme in Abhängigkeit von der $H_2O_2$-Dosierung dargestellt. ($H_2O_2$ : CSB = 1 : 1, 2 : 1 und 3 : 1 ; $H_2O_2$ : Fe = 10 : 1). Es zeigt sich, daß bei höherer $H_2O_2$-Ausgangskonzentration bezogen auf den Anfangs-CSB-Wert ein schnellerer $H_2O_2$-Abbau und somit eine raschere Oxidation der organischen Inhaltsstoffe erfolgt. Eine Reaktionsbeschleunigung ist auch durch Erhöhung der Eisenkonzentration in der Suspension zu erzielen (Fig. 2).

Nach der Oxidationsreaktion, die ein Absinken des pH-Wertes auf 2,4 bewirkt, wird mit Natronlauge neutralisiert (pH 7-8), wobei ein schlammiger Niederschlag aus Eisenoxidhydrat gebildet wird. Dieser Niederschlag wird abfiltriert und erneut als Katalysator für weitere Oxidationscyclen eingesetzt.

Es zeigte sich, daß der eisenhaltige Schlamm nach dreimaligem Einsatz als Katalysator noch wirksam ist (Tab. 1). Dies bedeutet, daß mit einer einmalig zu Beginn der Reaktion zugesetzten Eisensalzmenge durch wiederholten Einsatz des Schlamms kein eisenhaltiger Schlamm als Abfall anfällt, da dieser im Kreislauf eingesetzt werden kann.

Tabelle 1:

Oxidation von o-Toluolsulfonsäure (c=2 g/l) mit $H_2O_2/Fe^{3+}$ bzw. $H_2O_2$/eisenhaltigem Schlamm (Ausgangs-pH-Wert 3), Abnahme der CSB-Werte in Abhängigkeit von der $H_2O_2$-Dosis

| $H_2O_2$: CSB (g/g) | 0 | 1:1 | 2:1 | 3:1 |
|---|---|---|---|---|
| $H_2O_2$: Fe (mol/mol) | 0 | 10:1 | 20:1 | 30:1 |
| I CSB (mg/l) | 2340 | 980 | 572 | 461 |
| II CSB (mg/l) Schlamm aus I | | 1015 | 482 | 462 |
| III CSB (mg/l) Schlamm aus II | | 990 | 450 | 510 |
| IV CSB (mg/l) Schlamm aus III | | 1100 | 344 | 500 |

Beispiel 2 :

Die Inhaltsstoffe eines Sondermüllsickerwassers werden mit Hilfe des Fenton Reagenzes ($H_2O_2/Fe^{2+}$) oxidiert. $H_2O_2$ wird entsprechend dem CSB-Wert des Sickerwassers im Verhältnis $H_2O_2$ : CSB = 1 : 1 g/g zudosiert. Einsensalz wird im Verhältnis $H_2O_2$ : $Fe^{2+}$ = 10 : 1 mol/mol zugesetzt. Die Oxidation wird bei einem Ausgangs-pH-Wert von 3 durchgeführt. Nach Neutralisation (pH 7-8) der oxidierten Lösung fällt ein eisenhaltiger Schlamm an. Dieser wird nach Abzentrifugieren dem zu behandelnden Sickerwasser zugesetzt, die Lösung auf pH 3 eingestellt und mit $H_2O_2$ versetzt. Dieser Oxidationsvorgang wird jeweils mit demselben Schlamm 5 mal wiederholt.

Als Summenparameter wurden CSB, DOC, AOX und Phenol (Antipyrinmethode) vor und nach der Oxidation, d.h. nach Elimination von $H_2O_2$, verfolgt.

Wie aus Tabelle 2 hervorgeht, zeigt der eisenhaltige Schlamm nach 5-maligem Einsatz noch immer die gleiche katalytische Wirkung.

Tabelle 2:

Oxidation der Wasserinhaltsstoffe eines Sondermülldeponiesickerwassers mit $H_2O_2/Fe^{2+}$ bzw. $H_2O_2$/eisenhaltigem Schlamm.

$H_2O_2$-Dosis: $H_2O_2$ : CSB = 1:1 g/g

$H_2O_2$ : Fe = 10:1 mol/mol

| | CSB mg/l | DOC mg/l | AOX mg/l | Phenol mg/l |
|---|---|---|---|---|
| Sickerwasser | 8950 | 3900 | 107 | 85 |
| I nach Oxidation mit $H_2O_2/Fe^{2+}$ | 4050 | 2700 | 50 | 3 |
| II nach Oxidation mit $H_2O_2$/Schlamm aus I | 4580 | 2900 | 41 | 4 |
| III nach Oxidation mit $H_2O_2$/Schlamm aus II | 4350 | 2860 | 47 | 1 |
| IV nach Oxidation mit $H_2O_2$/Schlamm aus III | 4150 | 2700 | 49 | 5 |
| V nach Oxidation mit $H_2O_2$/Schlamm aus IV | 4410 | 2900 | 52 | 4 |
| VI nach Oxidation mit $H_2O_2$/Schlamm aus V | 4520 | 2830 | 44 | 3 |

Beispiel 3 :

In einer kontinuierlich betriebenen Anlage (10,2 l/h) bestehend aus 6 hintereinander geschalteten Rührreaktoren (1 Mischbecken, Zugabe von $FeCl_3$ bzw. eisenhaltigem Schlamm, pH-Steuerung und $H_2O_2$-Dosierung; 3 Reaktionsbehälter, 1 Neutrali sationsbecken sowie 1 Absetzbecken) mit einem Volumen von insgesamt 315 l wird ein künstliches Abwasser bestehend aus Phenylhydrazin, Chloressigsäure, Phenol, p-Nitrobenzoesäure, 4-Hydroxyphenylessigsäure, Nitrobenzolsulfonsäure, Anilin und P-Toluolsulfonsäure mit $H_2O_2/Fe^{3+}$ oxidativ behandelt. Nach Befüllen der Anlage mit Abwasser und $FeCl_3$-Salz wird die $FeCl_3$-Dosierung abgeschaltet und statt dessen der sich im Absetzbecken sammelnde eisenhaltige Schlamm als Katalysator in das Becken 1 zurückgeführt und weiterhin im Kreislauf eingesetzt.

Das künstliche Abwasser hatte einen CSB-Wert von 4360 mg/l, einen DOC-Wert von 1480 mg/l. Es wurde mit einer $H_2O_2$-Dosis, $H_2O_2$ : CSB = 3 : 1 g/g und einer Eisenmenge $H_2O_2$ : Fe = 10 : 1 mol/mol behandelt. Um die Wirksamkeit des eisenhaltigen Schlamms zu testen, wurden die CSB-Werte der Lösung vor und nach der Oxidation verfolgt.

Aus Tabelle 3 ist zu entnehmen, daß nach Füllen der Anlage mit $FeCl_3$ und anschließendem Rückführen des Schlamms, dieses für weitere 600 l Abwasser als Katalysator bei der vorgegebenen $H_2O_2$-Dosis $H_2O_2$ :CSB = 3 : 1 g/g ausreichte, den CSB-Wert um 87 % zu reduzieren.

Tabelle 3:

Oxidation eines künstlichen Abwassers mit $H_2O_2$/eisenhaltigem Schlamm (CSB = 4630 mg/l, DOC = 1480 mg/l) in einer kontinuierlich betriebenen Anlage (Oxidationsdauer 17,8 h) mit Rückführung des eisenhaltigen Schlamms.

| Laufzeit h | Abwasser behandelt l | Ablauf CSB mg/l | DOC mg/l |
|---|---|---|---|
| 31 | 315 | 750 | 350 |
| 40 | 408 | 635 | 389 |
| 50 | 510 | 585 | 370 |
| 60 | 612 | 645 | 369 |
| 70 | 714 | 510 | 350 |
| 80 | 816 | 565 | 255 |
| 90 | 918 | 555 | 243 |

Legenden zu den Figuren :

Fig. 1 :
Oxidation von o-Toluolsulfonsäure (Konzentration c = 2g/l, CSB = 2340 mg/l) mit $H_2O_2$/$FeCl_3$ ; dargestellt ist die korrespondierende Abnahme der Wasserstoffperoxid-Konzentration $C_{H2O2}$ in mmol/l in Abhängigkeit von der Reaktionsdauer t in min für drei verschiedene Ausgangskonzentrationen, wobei das $H_2O_2$ : Fe-Verhältnis 10 : 1 mol/mol beträgt.

Fig. 2 :
Oxidation von o-Toluolsulfonsäure (Konzentration c = 2 g/l, CSB = 2340 mg/l) mit $H_2O_2$/$FeCl_3$ ; dargestellt ist die korrespondierende Abnahme der Wasserstoffperoxid-Konzentration $C_{H2O2}$ in mmol/l in Abhängigkeit von der Reaktionsdauer t in min für zwei verschiedene $H_2O_2$ : Fe-Verhältnisse, wobei das $H_2O_2$ : CSB-Verhältnis 1 : 1 g/g beträgt.

## Patentansprüche

1. Verfahren zur chemisch-oxidativen Behandlung von Wasser, das toxische und/oder biologisch nicht der schwer abbaubare Stoffe enthält, bei dem
— das Wasser angesäuert,
— mit Eisenionen und Wasserstoffperoxid versetzt,
— nach der Oxidation der Stoffe neutralisiert und

— der ausgefallene eisenhaltige Schlamm abgetrennt wird, dadurch gekennzeichnet, daß
— der eisenhaltige Schlamm bei einem pH-Wert zwischen 6 und 9 abgetrennt und
— in weiterem zu behandelndem Wasser suspendiert wird,
— gleichzeitig oder danach in der Suspension ein pH-Wert von 2 bis 5 eingestellt und
— Wasserstoffperoxid zugesetzt wird.

2. Verfahren nach Anspruch 1, dadurch gekennzeichnet, daß das Verhältnis von zugesetztem Wasserstoffperoxid und Eisen höchstens 10 : 1 mol/mol beträgt.

3. Verfahren nach Anspruch 1 oder 2, dadurch gekennzeichnet, daß zur Einstellung eines pH-Wertes zwischen 6 und 9 mindestens einer der Stoffes aus der Gruppe der Alkalihydroxide und/oder Magnesiumhydroxid und/oder Magnesiumcarbonat verwendet wird.

## Claims

1. Process for the chemically oxidative treatment of water containing toxic and/or non- or difficultly biodegradable substances, wherein
— the water is acidified,
— is mixed with iron ions and hydrogen peroxide,
— is neutralised after oxidation of the substances, and
— the precipitated iron-containing sludge is separated, characterised in that
— the iron-containing sludge is separated at a pH value between 6 and 9, and
— is suspended in additional water to be treated,
— a pH value of 2 to 5 is simultaneously or thereafter set in the suspension, and
— hydrogen peroxide is added.

2. Process according to claim 1, characterised in that the maximum ratio of added hydrogen peroxide to iron is 10 : 1 mol/mol.

3. Process according to claim 1 or 2, characterised in that at least one of the substances selected from the group of alkali hydroxides and/or magnesium hydroxide and/or magnesium carbonate is used to set a pH value between 6 and 9.

## Revendications

1. Procédé de traitement chimique oxydant d'eau qui contient des substances toxiques et/ou biologiques difficilement ou non dégradables, dans lequel :
— on acidifie l'eau,
— on ajoute des ions fer et du peroxyde d'hydrogène,
— on neutralise après l'oxydation des substances et,
— on sépare la boue précipitée contenant du fer, caractérisé en ce qu' :
— on sépare la boue contenant du fer à un pH compris entre 6 et 9 et,
— on la met en suspension dans de l'eau à traiter,
— simultanément, ou après dans la suspension, on ajuste le pH entre 2 et 5 et,
— on ajoute du peroxyde d'hydrogène.

2. Procédé selon la revendication 1, caractérisé en ce que la proportion de peroxyde d'hydrogène ajouté au fer est au plus de 10 : 1 mole/mole.

3. Procédé selon la revendication 1 ou 2, caractérisé en ce que pour ajuster une valeur de pH entre 6 et 9, on utilise au moins une substance du groupe des hydroxydes alcalins et/ou de l'hydroxyde de magnésium et/ou du carbonate de magnésium.

FIG. 1

FIG.2